# EUROPÄISCHE PATENTSCHRIFT

(11) **EP 2 922 743 B1**
(45) Veröffentlichungstag und Bekanntmachung des Hinweises auf die Patenterteilung: **04.01.2017**
(21) Anmeldenummer: 13789342.6
(22) Anmeldetag: 12.11.2013
(51) Int. Cl.: B62D 29/04, B29C 70/88, B29C 70/22, B29C 53/04, B60G 7/00

(54) **ZUMINDEST ABSCHNITTSWEISE IN EINEM FASERVERBUNDWERKSTOFF AUSGEFÜHRTES BAUELEMENT IM FAHRWERKSBEREICH EINES FAHRZEUGS**
COMPONENT, AT LEAST SECTIONS OF WHICH ARE FORMED FROM A FIBRE COMPOSITE, IN THE CHASSIS REGION OF A VEHICLE
COMPOSANT CONSTITUÉ AU MOINS DANS CERTAINES ZONES D'UN MATÉRIAU COMPOSITE RENFORCÉ PAR DES FIBRES, UTILISÉ DANS LA ZONE DU CHÂSSIS D'UN VÉHICULE

(30) Priorität: 22.11.2012 DE 102012221405
(43) Veröffentlichungstag der Anmeldung: 30.09.2015
(73) Patentinhaber: Bayerische Motoren Werke Aktiengesellschaft, 80809 München (DE)
(72) Erfinder: KELLER, David, 80638 München (DE)
(86) Internationale Anmeldenummer: PCT/EP2013/073641
(87) Internationale Veröffentlichungsnummer: WO 2014/079738

(56) Entgegenhaltungen:
- DE-A1-102011 000 105
- US-A1- 2012 255 668
- US-B2- 8 039 069

## Beschreibung

Die Erfindung betrifft ein zumindest abschnittsweise in einem Faserverbundwerkstoff ausgeführtes Bauelement, welches einen auf Überlast hinsichtlich Zugbelastung ausgebildeten Abschnitt aufweist. Die DE 10 2011 000 105 A1 offenbart ein solches Bauelement. Bevorzugt, aber nicht obligatorisch, kann ein erfindungsgemäßes Bauelement im Fahrwerksbereich eines Fahrzeugs zum Einsatz kommen, beispielsweise in Form eines radführenden Lenkers oder dgl.

Im Kraftfahrzeugbau werden Überlastmechanismen bspw. im Fahrwerk durch lokales Versagen (bspw. Knicken) von Lenkern, Streben oder dgl. oder im Falle eines Unfalls auch durch Ausknüpfen oder Abscheren von Verbindungselementen, wie Gummigelenken oder dgl., dargestellt. Diese eingesetzten Mechanismen lassen sich an in Faserverbundkunststoffen ausgeführten Bauelementen, welche künftig zunehmend Einsatz finden werden, nur teilweise darstellen, da insbesondere endlosfaserverstärkte Kunststoffe kein plastisches Verhalten zeigen. Das Verhalten bei einem Unfall bzw. bei einer Überlast ist für solche Werkstoffe insbesondere im Zuglastpfad digital, d.h. dass zwischen dem vollständigen Trag-Verhalten und dem vollständigen Versagen typischerweise ein abrupter Übergang stattfindet. Dies ist jedoch beispielsweise im Falle eines radführenden Lenkers unerwünscht. Vielmehr sollte ein auf Überlast beanspruchter radführender Lenker das besagte Rad noch teilweise, wenn auch nicht exakt in der ursprünglichen Position führen können. Darüber hinaus stehen für eine gezielte Auslegung des Last-Tragverhaltens nach bzw. während eines Schadensereignisses nur wenige Stellgrößen zu Verfügung.

Es ist daher Aufgabe der vorliegenden Erfindung, ein zumindest abschnittsweise in einem Faserverbundwerkstoff ausgeführtes Bauelement, welches einen auf Überlast hinsichtlich Zugbelastung ausgebildeten Abschnitt aufweist, aufzuzeigen, welches bei einer gewissen betragsmäßig beschränkten, d.h. nicht extrem hohen Überlast in Zugrichtung nicht schlagartig vollständig ausfällt, sondern zumindest noch in geringem Umfang seine Funktion zu übernehmen in der Lage ist.

Diese Lösung dieser Aufgabe besteht in einem zumindest abschnittsweise in einem Faserverbundwerkstoff ausgeführten Bauelement beispielsweise eines Fahrzeugs und dort insbesondere im Fahrwerksbereich vorgesehen, welches einen auf Überlast hinsichtlich Zugbelastung ausgebildeten Abschnitt aufweist, welcher Abschnitt durch einen in mehreren Lagen übereinander gefalteten flachen Streifen oder ein sich in mehreren zusammenhängenden Lagen überlappendes offenes oder geschlossenes Profil von Faserhalbzeug oder Faserverbundwerkstoff mit in Richtung der Zugebelastung horizontalem Faserverlauf gebildet ist, die über die Kunststoff-Matrix des Faserverbundwerkstoffs miteinander verbunden sind. Der besagte Abschnitt mit den erfindungsgemäß mehreren sich überlappenden und dabei zusammenhängenden Lagen, welche auch im Falle eines Profils praktisch gefaltet sind, wird im weiteren auch als Überlappungsbereich bezeichnet.

Erfindungsgemäß sind im Bauelements Überlappungen der im wesentlichen unidirektionalen Fasern vorgesehen, wobei die Fasern als Endlosfasern ausgeführt und im wesentlichen in Richtung der Zugbelastung des Bauelements ausgerichtet sind. Im Überlappungsbereich liegen bei Betrachtung von der Seite diese Fasern quasi in Form eines S-Schlages, d.h. sie beschreiben im weitesten Sinne den Buchstaben "S", bspw. derart, dass eine bspw. von rechts horizontal herangeführte Faser in einer Vertikalebene in einem 180°-Bogen nach oben geführt ist und zunächst für eine gewisse Strecke wieder nach rechts verläuft um daraufhin in einem weiteren 180°-Bogen nach oben nach links horizontal weitergeführt zu werden. Nun kann vorgesehen sein, dass zunächst lediglich ein Faserhalbzeug (= "trockenes" Gelege oder dgl. mit einer Vielzahl von parallel zueinander verlaufenden unidirektionalen Verstärkungsfasern beispielsweise aus Carbon) entsprechend gelegt ist und durch Zugeben der Kunststoffmatrix zum Bauelement ausgebildet wird, oder dass ein vorbereiteter Faserverbundwerkstoff mit unidirektionalen Verstärkungsfasern (bspw. in Form von "prepregs") entsprechend gelegt wird, um anschließend das Bauelement entsprechend zu fertigen. In beiden Fällen sind die übereinander gefalteten Lagen der besagten parallelen Verstärkungsfasern im Überlappungsbereich miteinander verbunden, und zwar über die gesamthaft das Bauelement formende Kunststoffmatrix des Faserverbundwerkstoffs.

Mit einer solchen Ausgestaltung kann ein erfindungsgemäß gestaltetes Bauelement bei Auftreten einer Zug-Überlast in Zugrichtung quasi entfaltet werden und reißt oder bricht somit nicht schlagartig auseinander, sondern es verbindet der auf Überlast hinsichtlich Zugbelastung ausgebildete Abschnitt bzw. Überlappungsbereich die üblicherweise beidseitig dieses Abschnittes liegenden Teile des Bauelements auch nach Aufreißen bzw. Entfalten im Überlappungsbereich weiterhin miteinander, so dass dieses Bauelement seine Funktion insbesondere der Zugkraftübertragung auch nach einem solchen Überlastfall zumindest teilweise weiterhin ausüben kann. Infolge der erfindungsgemäßen Ausgestaltung kann damit eine Gewichtsreduktion gegenüber einer möglichen Alternative, nämlich dem Einbau eines separaten Überlastelements aus dem Stand der Technik, erzielt und darüber hinaus vorteilhafterweise eine sehr hohe Energieaufnahme erreicht werden. Das Kraft-Wege-Verhalten des besagten Überlappungsbereichs kann in weiten Bereichen unabhängig voneinander für den normalen Einsatz sowie für das Überlastverhalten durch die Wahl der Breite des besagten Streifens von Verstärkungsfasern bzw. Faserverbundmaterial bzw. eine geeignete Wahl des Profilquerschnitts und der Überlappungslänge eingestellt werden. Von besonderem Vorteil ist dabei das schrittweise Versagen eines erfindungsgemäßen Bauelements in dessen besagten auf Überlast ausgelegten Abschnitt, was in einer besonders vorteilhaften Weiterbildung auch in mehreren Schritten erfolgen kann, indem mehrere Überlappungen vorgesehen sind.

Gemäß einer vorteilhaften Weiterbildung kann der Überlappungsbereich durch Zwischenlagen und/oder Vernähugen verstärkt sein. Hierdurch kann das Kraft-Wege-Verhalten im Überlastfall ebenfalls in weitem Umfang beeinflusst werden. Bei einer Vernähung sind die zumindest zwei der im Überlappungsbereich übereinander liegenden Faserhalbzeuge oder Schichten von Faserverbundwerkstoff insbesondere an den Fasern durch eine zusätzliche Verbindung fest, bspw. kraftschüssig miteinander verbunden, und zwar bspw. durch Nähen oder Heften oder Taften oder Klammern oder dgl.. Eine Verstärkung kann aber auch durch eine Zwischenlage zwischen zwei sich zusammenhängend überlappenden Lagen von Verstärkungs-Fasern (in Form eines Faserhalbzeugs oder in Form von Faserverbundwerkstoff) gebildet sein, wobei diese Zwischenlage vorzugsweise aus dem Überlappungsbereich in den sich an diesen anschließenden Bereich des Bauelements hinaus gezogen sein sollte und auch außerhalb des Überlappungsbereichs mit den anderen Faser-Lagen verbunden sein sollte. Grundsätzlich kann die Überlappungslänge jeder gefalteten Lage im Überlappungsbereich gleich sein; alternativ kann die Überlappungslänge jeder gefalteten Lage im Überlappungsbereich aber auch unterschiedlich sein.

Es kann in die oder den Falten des besagten auf Überlast hinsichtlich Zugbelastung ausgebildeten Abschnitt oder Überlappungsbereich ein geeignetes Füllmaterial eingelegt sein, welches einem Entfalten im Überlastfall förderlich sein kann und weiterhin dazu dienen kann, Faserbrüche zu vermeiden. Bei einem solchen Füllmaterial kann es sich bspw. um eine sich mit ihrer Achse quer zu den jeweiligen Verstärkungsfasern erstreckende Rolle oder einen Schlauch, alternativ aber auch um eine flächige Lage bspw. aus Silikon oder Teflon handeln, welche Materialien ein Aneinander-Haften der sich überlappenden Lagen von Faserverbundmaterial in der Biege-Falte, die zur Darstellung der zusammenhängenden Überlappung vorgesehen ist, verhindern. Damit lässt sich also das Versagens-Verhalten, d.h. das Aufbrechen der Überlappung im Falle einer bestimmten Überlast gezielt einstellen.

Bereits erwähnt wurde, dass es sich bei einem erfindungsgemäß gestalteten Bauelement bspw. um einen radführenden Lenker im Fahrwerk eines Kraftfahrzeugs handeln kann. Selbstverständlich können auch andere auf Zug belastete Bauelemente, die bei Überlast nicht schlagartig komplett auseinander reißen sollen, in entsprechender Weise gestaltet sein. Zurückkommend auf einen radführenden Lenker ist es bereits bekannt, dass diese auch sich nicht nur linear ersteckend sondern näherungsweise stufenartig geformt sein können, wobei dann in verschiedenen Stufen jeweils ein besagter Abschnitt oder Überlappungsbereich vorgesehen sein kann. Im Übrigen kann ein solcher Lenker mit einem Überlappungsbereich aus verschiedenen Einzelteilen aufgebaut sein, nämlich einem vorgefalteten und den besagten Überlappungsbereich bildenden Stück, an welchem beidseitig ein Endstück angebracht ist, über welches der Lenker mit einem weiteren Bauelement verbunden wird. Diese Endstücke können bspw. aus Spritzguss oder Faserverbundpressmasse bestehen und bspw. stoffschlüssig mit dem den Überlappungsbereich bildenden Stück verbunden sein. Alternativ können die Endstücke aber auch aus metallischen Werkstoffen bestehen.

Weitere Einzelheiten, Merkmale und Vorteile der Erfindung ergeben sich aus der nachfolgenden Beschreibung anhand der Zeichnungen. Es zeigen
- Figur 1: eine perspektivische Ansicht eines Streifens von Faserhalbzeug oder Faserverbundwerkstoff mit erfindungsgemäßem Überlappungsbereich (mit mehreren Lagen dieses Streifens),
- Figur 2: eine Seitenansicht der Darstellung in Fig.1,
- Figuren 3 bis 8: verschiedene alternative Ausführungsformen von Lagen von Faserhalbzeug-Streifen oder Faserverbundwerkstoff-Streifen im jeweiligen erfindungsgemäßen Überlappungsbereich, jeweils in einer Seitenansicht analog Fig.2,
- Figur 9: eine mögliche Anordnung eines erfindungsgemäßen Bauelements in einem Fahrwerk eines Fahrzeugs,
- Figur 10: eine erfindungsgemäße Ausgestaltung, bei welcher anstelle eines Streifens ein Profil in einem Überlappungsbereich in mehreren Lagen gelegt ist,
- Figur 11: eine weitere mögliche Ausgestaltung eines Profils, welches analog Fix. 10 gelegt sein kann, und
- Figur 12: eine räumliche Teilschnittdarstellung eines geschlossenen Profils, das einen erfindungsgemäßen Überlappungsbereich aufweist.

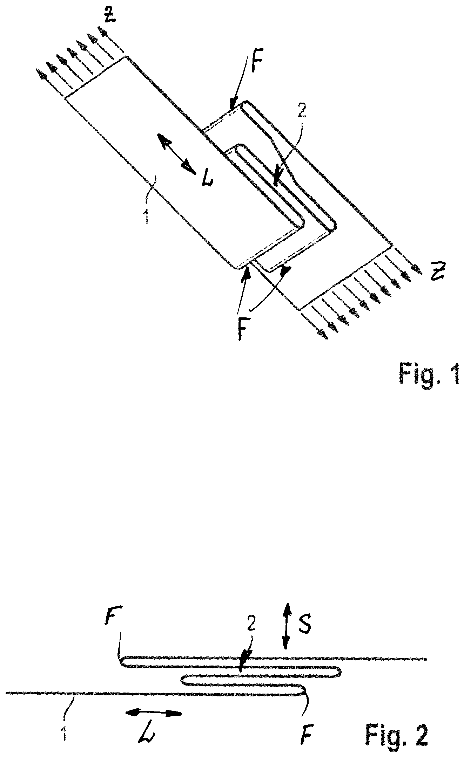

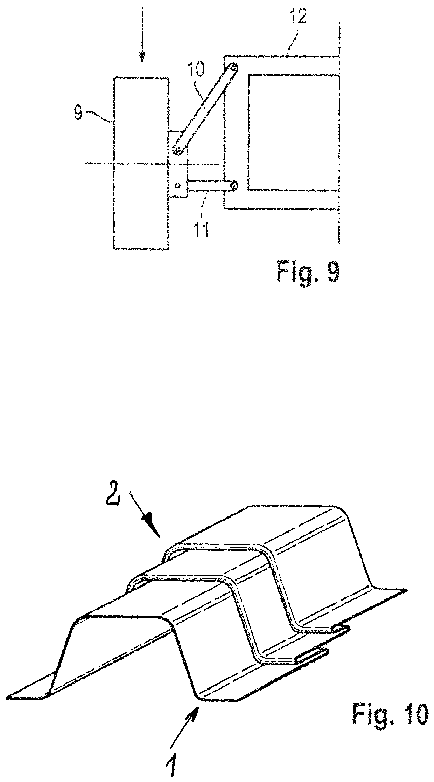

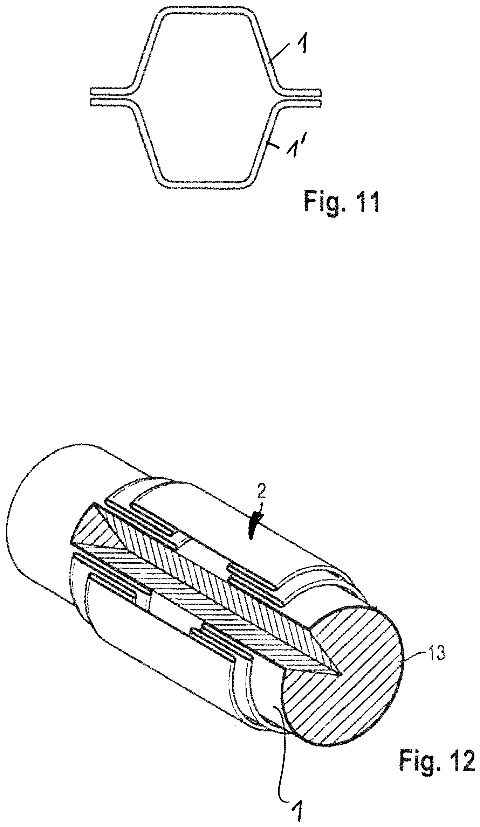

In den Figuren 1- 8 sowie Figuren 10 - 12 ist ein Bestandteil eines erfindungsgemäßen Bauelements dargestellt, welches Bauelement beispielsweise als Zugstrebe in einem Kraftfahrzeug, die ihrerseits als radführender Lenker zum Einsatz kommen kann, dienen kann. Das Bauelement weist bspw. einen flachen Streifen (vgl. Fig.1) oder ein offenes Profil (vgl. Fig.10) oder ein geschlossenes Profil (vgl. Fig.11, 12) jeweils aus einem unidirektional verstärkten Faserverbundwerkstoff 1, alternativ ein entsprechendes Faserhalbzeug 1 mit unidirektional verlaufenden Verstärkungsfasern bspw. aus Carbon, auf, der bzw. das in einem sog. Überlappungsbereich 2 in mehreren Lagen übereinander gefaltet ist. Die Einzellagen oder auch Lagenbündel bilden somit den jeweiligen Überlappungsbereich 2, in welchen mehrere Falten einzelner oder mehrerer in sich zusammenhängender Lagen entweder von Faserhalbzeug oder zunächst noch nicht verfestigtem Faserverbundwerkstoff übereinander gestapelt abgelegt sind bzw. werden. Die Lagen sind durch Falten des Materials gebildet und in Längsrichtung L des Streifens des Faserverbundwerkstoffs 1 betrachtet (vgl. Fig.1) über die sich beim FaltProzess bildenden Falten F zusammenhängend miteinander verbunden. Weiterhin sind die in Figur 1 sich überlappenden fünf Lagen von Faserverbundwerkstoff 1 oder Faserhalbzeug 1 im Überlappungsbereich 2 in der senkrecht auf dem Streifen 1 stehenden Richtung S (vgl. Fig.2) miteinander verbunden, und zwar über die Kunststoffmatrix des Faserverbundwerkstoffs.

Innerhalb des Streifens 1 von Faserverbundmaterial oder Faserhalbzeug erstrecken sich dabei die bspw. in Carbon ausgeführten Verstärkungsfasern vorzugsweise unidirektional in Längsrichtung L des Streifens 1; zusammengehalten werden die nebeneinander liegenden verstärkungsfasern durch winkelig zu den Verstärkungsfasern verlaufenden Flechtfäden, welche bspw. aus Glasfasern gebildet sein können. Weiterhin ist in Fig. 1 ist durch Pfeile Z, die sich in Längsrichtung L des dargestellten Streifens von Faserverbundmaterial 1 erstrecken, die Zugbelastung des Bauelements bzw. des in diesem befindlichen Streifens 1 dargestellt, welche gleichgerichtet der Erstreckungsrichtung der in diesem vorgesehenen und durch Endlosfasern gebildeten Verstärkungsfasern ist. In Richtung dieser Pfeile Z wird im Falle einer ZugÜberlast des betreffenden Bauelements der Überlappungsbereich 2 bzw. des Streifens 1 quasi auseinandergefaltet.

Ein erfindungsgemäßes Bauelement kann selbstverständlich durch mehrere solcher Streifen 1 von Faserverbundmaterial gebildet sein, die ihrerseits auch wieder in Pfeilrichtung S betrachtet übereinander liegen können; ferner können selbstverständlich Decklagen oberhalb und unterhalb des figürlich dargestellten Streifens 1 von Faserhalbzeug oder Faserverbundmaterial vorgesehen sein, welche ihrerseits aus einer oder mehreren Lagen faserverstärkter Kunststoffe, bspw. aus unidirektionalen Gelegen, Geflechten, Geweben oder anderen textilen Halbzeugen bestehen können.

In den Bereich der Faltungen des Streifens 1 von Faserverbundmaterial können weiterhin zusätzliche offene Enden weiterer Lagen von Faserverbundmaterial oder Faserhalbzeug eingebracht sein, wie im weiteren erläutert wird und dargestellt ist. Ferner können einzelne oder mehrere dieser Lagen insbesondere im Überlappungsbereich 2 mittels Fäden in Dickenrichtung (Pfeilrichtung S) stellenweise vernäht, getuftet oder mittels eines anderen textilen Prozesses oder durch Klammern zusammengeheftet sein. Diese Heftungen können grundsätzlich sowohl den Überlappungsbereich 2 als auch Abschnitte abseits des Überlappungsabschnitts 2 des Bauelements betreffen.

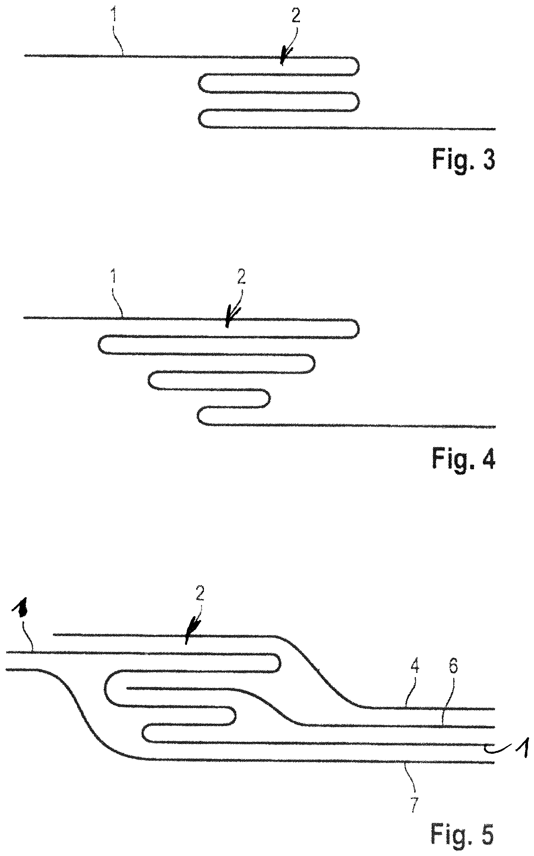

In den Figuren 3 bis 8 sind stark abstrahiert verschiedene Ausführungsformen gezeigt, wie die Lagen (hier in Form von Streifen 1) von Faserhalbzeug oder Faserverbundmaterial angeordnet sein können.

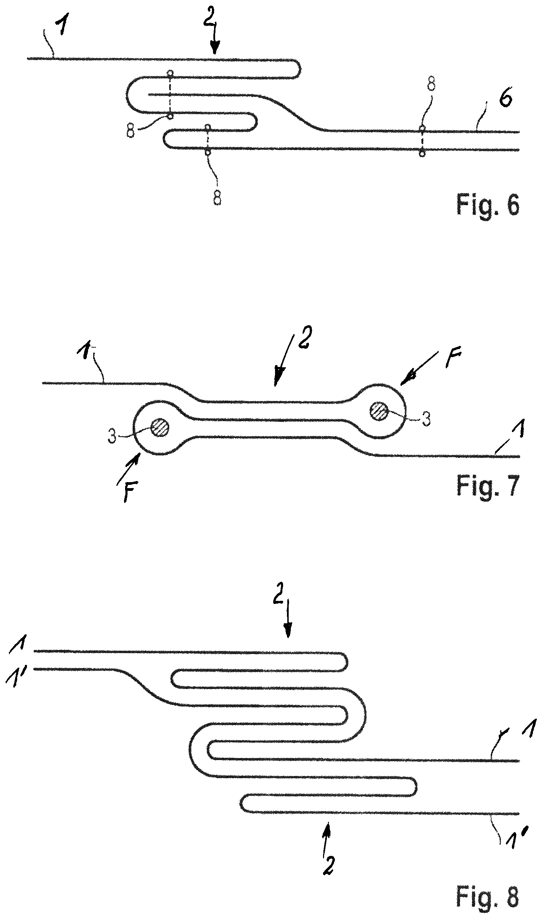

Gemäß Figur 3 ist in dem Überlappungsbereich 2 die Überlappungslänge der Lagen gleich. Gemäß Figur 4 ist die Überlappungslänge unterschiedlich. Figur 8 zeigt einen Aufbau mit zwei ineinander gearbeiteten Überlappungsbereichen 2 bestehend aus zwei gefalteten Lagen 1, 1 von Faserverbundwerkstoff oder Faserhalbzeug.

In Figur 5 ist eine Ausführungsform mit einer oberen Decklage 4, einer erfindungsgemäß gefalteten Lage 1, einer eingelegten Zwischenlage 6 und einer unteren Decklage 7 gezeigt, die jeweils durch ein Faserhalbzeug oder ein Faserverbundmaterial in Form eines prepregs oder dgl. gebildet sind. Figur 6 zeigt einen ähnlichen Aufbau wie Figur 5, jedoch mit Vernähungen 8 in unterschiedlichen Bereichen.

Gemäß Figur 7 sind im Überlappungsbereich 2 in die gefaltete Lage 1 zusätzliche Füllmaterialien 3 in die Falte F bzw. deren Spitze eingelegt. Diese Füllmaterialien 3 sorgen für einen größeren Krümmungsradius des gefalteten Streifens 1 und können damit einem ungewünscht frühen Versagen infolge Faserbruchs vorbeugen. Als Füllmaterialien 3 kommen grundsätzlich dieselben Materialien wie für Decklagen in Frage, insbesondere aber auch kurzfasrige, band- oder kordelartige Ausprägungen von Fasergelegen oder dgl... Wird hingegen für das besagte Füllmaterial 3 ein Werkstoff verwendet, welcher sich nicht mit dem Kunststoffmaterial des Faserverbundwerkstoffs verbindet, so ist dieses Füllmaterial einem Auseinanderfalten des Überlappungsbereichs 2 im Falle einer Zug-Überlast des betreffenden Bauelements besonders förderlich.

Ein erfindungsgemäß gestaltetes Bauelement kann als lasttragende Strebe beispielsweise im Fahrwerksbereich eines Fahrzeugs eingesetzt werden. Die Streben können dabei beweglich z. B. in der Radführung angeordnet sein (= Lenker). Schnittstellen zu angrenzenden Bauteilen sind dann vorwiegend über Gelenke oder anderweitig nachgiebige Bauweisen dargestellt (beispielsweise in Form eines Filmscharniers). Alternativ können solche Bauelemente als starre Streben im Fahrzeug wie bspw. Verstrebungen in Achsträgern oder zwischen einem Achsträger und der Karosserie eingesetzt werden. Bei den erfindungsgemäß gestalteten Bauelementen kann es sich um montierte Einzelkomponenten oder integrative Bestandteile wie einem gegliederten Achssystem, bspw. einem Achsträger mit integrierten Lenkern aus Kunststoff handeln. Vorwiegend in Bereichen, wo im Überlastfall oder Unfall (bspw. Frontcrash des Fahrzeugs, aber auch.Hindernisüberfahrt) hohe, möglicherweise schlagartige Zuglastspitzen auftreten, die über ein gezieltes Bauteilversagen abgebaut werden sollen, kann ein erfindungsgemäß gestaltetes Bauelement mit zumindest einer in zumindest einem Überlappungsbereich 2 gefalteter Lage 1 von Faserverbundwerkstoff eingesetzt werden.

Figur 9 zeigt eine solche Verwendung als Zuglastelement im Fahrwerk eines Kraftfahrzeugs. Dessen Rad 9 ist über eine Zugstrebe 10 und eine Druckstrebe 11 an einem Achsträger 12 befestigt. Die Gelenke zwischen Achsträger 12 und Streben 10, 11, bzw. zwischen Streben 10, 11 und dem Radträger des Rades 9 können auch durch nachgiebige Bauweisen dargestellt werden. Dadurch wird die jeweilige Strebe 10, 11 integraler Bestandteil eines bspw. eines Dreieckslenkers, Achsträgers oder Radträgers.

Bauelemente mit einem erfindungsgemäßen und hinsichtlich Überlastausgelegtem Überlappungsbereich 2 können als profil- oder bandartige Bauteile mit gefülltem (monolithischem) Querschnitt ausgebildet sein, wobei der Querschnitt über die Bauteillänge veränderlich gestaltet sein kann. Zur Erfüllung von bspw. Biegesteifigkeitsanforderungen aus dem Betrieb kann es sinnvoll sein, die Querschnitte auch als offene Profile (bspw. U-Profile) bzw. durch Verkleben von Halbschalen oder durch Flechten auch als geschlossene Profile darzustellen. Dabei erstreckt sich die Längsachse des jeweiligen Profils vornehmlich entlang von Zugbelastungs-Richtungen.

In den Figuren 10 und 11 sind beispielhafte Ausgestaltungen von Profilen gezeigt, die aus dem erfindungsgemäßen Faserverbundwerkstoff 1 bestehen. Figur 10 zeigt ein hutförmiges oder u-fömiges Querschnittsprofil mit integrierten Überlappungsbereichen 2, Figur 11 ein geschlossenes Profil, bestehend aus zwei aneinander gefügten Halbschalen 1, 1'. Die beiden Halbschalen 1, 1' können dabei bspw. vernäht, geklebt, vernietet, verschraubt, verschweißt (im Falle von Thermoplast) oder durch co-curing, d.h. bei gemeinsamer Fertigung, in einem Injektionsvorgang verbunden werden.

Figur 12 zeigt eine räumliche Teilschnittdarstellung eines geschlossenen Hohl-Profils, bestehend aus einem hier kreiszylindrischen Kern 13, auf welchem eine Lage 1 von Faserhalbzeug oder Faserverbundmaterial in erfindungsgemäßer Weise, nämlich mit einem Überlappungsbereich 2, aufgebracht ist, Dieses Hohl-Profil lässt sich durch Umflechten des Kerns 13 herstellen, wobei die Flechtrichtung im Überlappungsbereich 2 mehrmals umgedreht wird.

Wenngleich bislang lediglich Carbonfasern als Verstärkungsfasern genannt waren, so können doch im Rahmen der vorliegenden Erfindung als Faserverbundwerkstoff beliebige endlosfaserverstärkte Kunststoffe mit bspw. Kohlefasern, Glasfasern, Aramidfasern, Basalt-Fasern zum Einsatz kommen, ferner als Deckschichten auch Faservliese oder Fasermatten aus Wirrfaser, ferner recycelte Endlosfasern oder Kombinationen aus obigen Werkstoffen. Als Kunststoffe können gleichermaßen Thermoplaste oder Duroplaste zum Einsatz kommen, selbstverständlich auch SMC (vorgetränkte Prepregs mit Vlies).

Kerne (wie in Fig.12 unter der Bezugsziffer 13 gezeigt) oder Füllmaterial (wie in Fig.7 unter der Bezugsziffer 3 gezeigt) können als Prozessmittel in einem späteren Arbeitsschritt entfernt werden oder aber im erfindungsgemäß gestalteten Bauelement verbleiben. Leichte, schubfeste Kerne, insbesondere Schaum oder Blaskerne, können bei geschlossenen Profilen durch Auswaschen oder anderweitige Nacharbeiten nachträglich entfernt werden, um ein hohles oder teilweise hohles Profil zu erhalten.

Während im normalen Betriebszustand eines erfindungsgemäßen Bauelements dessen Eigenschaften im Wesentlichen durch die Fasereigenschaften und selbstverständlich durch die Gestaltung insbesondere abseits des Überlappungsbereichs 2 bestimmt sind, wird im Überlastfall des Bauelements ein Schälmodus oder Delaminationsmodus in Gang gesetzt, bei welchem der im Überlappungsbereich 2 zunächst gefaltete Stapel aus übereinanderliegenden Lagen 1 nach und nach abgewickelt wird. Dabei kann das Kraft-Wege-Verhalten dieses Abwicklungsprozesses zusätzlich durch optional eingebrachte Zwischenlagen ("Füllmaterial") und/oder Vernähungen beeinflusst werden. Diese sog. Versagensfunktion des erfindungsgemäß gestalteten Bauelements wird bei Zuglasten oberhalb einer bestimmten Auslegungsgrenze erreicht. Maßgebliche Schadensphänomene sind Delaminationen im Bereich der Faltungen F, möglicherweise in Kombination mit Versagen ggf. vorgesehener Heft- oder Nähfäden. Dadurch werden im dynamischen Fall die Faltungen nacheinander abgewickelt.

Im Verlauf einer solchen Schadensentwicklung des Bauelements, d.h. während eines solchen Abwicklungsprozesses wird vorteilhafterweise Energie (bspw. aus einem Fahrzeug-Crash stammend) abgebaut. Der Energieabbau setzt sich aus mehreren Phasen zusammen, nämlich einer Initialphase, in der ein erster Schaden provoziert wird, weiterhin steht in einer zweiten Phase der zeitliche Verlauf der abgebauten Energie in einem direkten Verhältnis zur durch "Abwickeln" der Überlappungen frei werdenden Bruchfläche. Dadurch stehen für die Auslegung des Bauelements grundsätzlich die geometrischen Dimensionen der Faltenüberlappungen zur Verfügung. In der letzten Phase des Energieabbaus wird die Energie durch lokales und schließlich globales Versagen der Faserlagen herbeigeführt. Auch das Faserversagen kann durch unterschiedliche Längen der Überlappungen im Überlappungsbereich 2 gezielt eingestellt sein. Dabei ist für das Erreichen einer gewünschten Versagensfunktion die Kombination aus geometrischer Gestaltung, Faserarchitektur und Materialkombination verantwortlich.

## Patentansprüche

1. Zumindest abschnittsweise in einem Faserverbundwerkstoff ausgeführtes Bauelement beispielsweise eines Fahrzeugs und dort insbesondere im Fahrwerksbereich vorgesehen, welches einen auf Überlast hinsichtlich Zugbelastung ausgebildeten Abschnitt aufweist, **dadurch gekennzeichnet, dass** dieser Abschnitt durch einen in mehreren Lagen übereinander gefalteten flachen Streifen (1) oder ein sich in mehreren zusammenhängenden Lagen (1) überlappendes offenes oder geschlossenes Profil (1) von Faserhalbzeug (1) oder Faserverbundwerkstoff (1) gebildet ist, die über die Kunststoff-Matrix des Faserverbundwerkstoffs miteinander verbunden sind.

2. Bauelement nach Anspruch 1, wobei im besagten Abschnitt eine zusätzliche feste Verbindung zwischen zumindest zwei der übereinander gefalteten oder sich überlappenden Lagen vorgesehen ist.

3. Bauelement nach Anspruch 2, wobei die zusätzliche feste Verbindung durch Vernähen oder Taften oder Heften oder Klammern dargestellt ist.

4. Bauelement nach einem der vorhergehenden Ansprüche, wobei der besagte Abschnitt oder Überlappungsbereich (2) durch eine Zwischenlage verstärkt ist.

5. Bauelement nach einem der vorhergehenden Ansprüche, **dadurch gekennzeichnet, dass** die Überlappungslänge jeder gefalteten Lage (1) im Überlappungsbereich (2) gleich ist.

6. Bauelement nach einem der Ansprüche 1 bis 3, **dadurch gekennzeichnet, dass** die Überlappungslänge jeder gefalteten Lage (1) im Überlappungsbereich (2) unterschiedlich ist.

7. Bauelement nach einem der vorhergehenden Ansprüche, **dadurch gekennzeichnet, dass** in die Falten (F) des besagten Abschnitts oder Überlappungsbereichs (2) ein Füllmaterial (3) eingelegt ist.

8. Bauelement nach einem der vorangegangenen Ansprüche als radführender Lenker im Fahrwerk eines Kraftfahrzeugs.

9. Bauelement nach Anspruch 8, wobei der Lenker sich nicht linear ersteckend sondern näherungsweise stufenartig geformt ist und in verschiedenen Stufen jeweils ein besagter Abschnitt oder Überlappungsbereich (2) vorgesehen ist.

## Claims

1. A component, for example of a vehicle, at least portions of which are formed in a fibre composite material, and which is provided in the vehicle especially in the region of the chassis, which component has a portion which is configured for overload in respect of tensile load, **characterised in that** this portion is formed by a flat strip (1) which is folded into a plurality of superimposed layers or by an open or closed profile (1) which overlaps itself in a plurality of cohesive layers (1), of fibre semi-finished product (1) or fibre composite material (1), which are interconnected by the plastics matrix of the fibre composite material.

2. A component according to claim 1, wherein an additional rigid connection is provided between at least two of the layers which are folded over each other or overlap each other in said portion.

3. A component according to claim 2, wherein the additional rigid connection is produced by sewing or taffeting or tacking or clipping.

4. A component according to any one of the preceding claims, wherein said portion or overlap region (2) is reinforced by an intermediate layer.

5. A component according to any one of the preceding claims, **characterised in that** the overlap length of each folded layer (1) is the same in the overlap region (2).

6. A component according to any one of claims 1 to 3, **characterised in that** the overlap length of each folded layer (1) differs in the overlap region (2).

7. A component according to any one of the preceding claims, **characterised in that** a filler material (3) is introduced into the folds (F) of said portion or overlap region (2).

8. A component according to any one of the preceding claims as a wheel-controlling link in the chassis of a motor vehicle.

9. A component according to claim 8, wherein the link does not extend linearly but is formed approximately in the manner of a step and a respective mentioned portion or overlap region (2) is provided in different steps.

## Revendications

1. Composant, par exemple d'un véhicule réalisé au moins par zones dans un matériau composite renforcé par des fibres, et prévu en particulier dans la zone du châssis qui comprend un segment réalisé en surcharge concernant la contrainte de traction,
**caractérisé en ce que**
ce segment est formé par une bande plate (1) repliée en plusieurs couches qui se chevauchent, ou par un profilé (1) de produit semi-fini renforcé par des fibres (1) ou d'un matériau composite renforcé par des fibres (1) ouvert ou fermé se chevauchant selon plusieurs couches (1) continues, qui sont reliées par l'intermédiaire de la matrice en matériau synthétique du matériau composite renforcé par des fibres.

2. Composant conforme à la revendication 1,
dans lequel dans le segment, il est prévu une liaison ferme supplémentaire entre au moins deux des couches repliées l'une sur l'autre ou se chevauchant.

3. Composant conforme à la revendication 2,
dans lequel la liaison ferme supplémentaire est obtenue par couture, à l'aide de taffetas, fixation au moyen d'épingles, ou agrafage.

4. Composant conforme à l'une des revendications précédentes,
**caractérisé en ce que**
le segment ou la zone de chevauchement (2) est renforcé par une couche intermédiaire.

5. Composant conforme à l'une des revendications précédentes,
**caractérisé en ce que**
la longueur de chevauchement de chaque couche repliée (1) est similaire dans la zone de chevauchement (2).

6. Composant conforme à l'une des revendications 1 à 3,
**caractérisé en ce que**
la longueur de chevauchement de chaque couche repliée (1) est différente dans la zone de chevauchement (2).

7. Composant conforme à l'une des revendications précédentes,
**caractérisé en ce que**
dans les plis (F) du segment ou de la zone de revêtement (2) est inséré un matériau de remplissage (3).

8. Composant conforme à l'une des revendications précédentes, constitué par un bras de guidage de roue dans le châssis d'un véhicule.

9. Composant conforme à la revendication 8,
dans lequel le bras est formé de façon à ne pas s'étendre linéairement, mais essentiellement par étage, et, dans les différents étages, il est respectivement prévu un segment ou une zone de chevauchement (2).
